(19) Europäisches Patentamt
European Patent Office
Office européen des brevets

(11) **EP 3 521 135 B1**

(12) **EUROPEAN PATENT SPECIFICATION**

(45) Date of publication and mention
of the grant of the patent:
**15.07.2020  Bulletin 2020/29**

(51) Int Cl.:
***B62D 5/00*** *(2006.01)*       ***B62D 6/00*** *(2006.01)*

(21) Application number: **19153449.4**

(22) Date of filing: **24.01.2019**

(54) **STEERING CONTROL DEVICE**

LENKUNGSSTEUERUNGSVORRICHTUNG

DISPOSITIF DE COMMANDE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.01.2018   JP 2018011649**

(43) Date of publication of application:
**07.08.2019   Bulletin 2019/32**

(73) Proprietor: **JTEKT CORPORATION
Osaka 542-8502 (JP)**

(72) Inventors:
• **NAMIKAWA, Isao
Osaka-shi, Osaka 542-8502 (JP)**
• **ANRAKU, Koji
Osaka-shi, Osaka 542-8502 (JP)**
• **KAKIMOTO, Yuusuke
Osaka-shi, Osaka 542-8502 (JP)**
• **MATSUDA, Satoshi
Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)**

(56) References cited:
JP-A- 2006 076 413      US-A1- 2006 011 404
US-A1- 2017 369 095

## Description

BACKGROUND OF THE INVENTION

1. Field of the Invention

The present invention relates to a steering control device to be applied to a steering device that includes a steered-side actuator that is capable of steering steered wheels of a vehicle utilizing torque of an electric motor.

2. Description of the Related Art

Japanese Patent Application Publication No. 2006-76413 (JP 2006-76413 A), for example, describes a control device that calculates a target steered angle in accordance with a steering angle and that controls a detection value of a steered angle to a target steered angle through feedback control. JP 2006-76413 A discloses the subject-matter of the preamble of claim 1.

In the steering device and the steering control device, in the case where the vehicle is brought into a stationary state with a steering wheel turned, for example, a force that returns steered wheels toward a neutral position acts on the steered wheels. When the feedback control is not performed, the steered wheels become stationary after being displaced to a position at which the returning force and the friction force between the steered wheels and the road surface are balanced with each other. In the case where the feedback control is performed, however, torque of an electric motor is generated in order to maintain the steered angle at the target steered angle. Therefore, in the case where a user does not operate the steering wheel when the vehicle is stationary, power consumption may be increased with a large current continuously flowing through the electric motor, since the detection value of the steered angle is controlled to the target steered angle, which is not always required by the user, through the feedback control.

SUMMARY OF THE INVENTION

It is an object of the present invention to provide a steering control device that can address the above phenomenon.

[1] An aspect of the present invention provides a steering control device that controls a steering device that includes a steered-side actuator that is capable of steering steered wheels of a vehicle utilizing torque of an electric motor, including:

a central processing unit, in which
the central processing unit executes: a target steered angle calculation process of calculating a target steered angle, which is a target value for a steered angle of the steered wheels, in accordance with an operation on a steering wheel; a torque operation process of operating torque of the electric motor in order to control a detection value of the steered angle to the target steered angle through feedback control; and a decreasing process of decreasing a current that flows through the electric motor in the case where a vehicle speed is equal to or less than a prescribed speed and an absolute value of input torque input to the steering wheel is equal to or less than a prescribed value.

With the configuration described above, the current which flows through the electric motor is decreased through the decreasing process in the case where the vehicle speed is equal to or less than the prescribed speed and the absolute value of input torque input to the steering wheel is equal to or less than the prescribed value. In the case where the absolute value of the input torque is equal to or less than the prescribed value, it is highly probable that the user has no intention to perform a steering operation. Therefore, it is possible to decrease the current which flows through the electric motor while suppressing what is against the intention of the user by decreasing the current which flows through the electric motor with respect to a current that is necessary to control the steered angle to the target steered angle through feedback control in the case where it is highly probable that the user has no intention to perform a steering operation.

[2] Another aspect of the present invention provides the steering control device according to the aspect described above, in which: the steering device includes a switching device that switches transfer of power between the steering wheel and the steered wheels between a transfer state and a blocked state; and the decreasing process is executed when the switching device switches the power transfer to the blocked state.

In the blocked state, the target steered angle which matches an operation on the steering wheel for a case where the absolute value of input torque input to the steering wheel is small tends to deviate from the steered angle which can be maintained irrespective of torque of the electric motor. Therefore, with the configuration described above, the decreasing process is particularly more useful in the blocked state.

[3] Another aspect of the present invention provides the steering control device according to the aspect described above, in which the decreasing process is a process of gradually decreasing the current which flows through the electric motor. With the configuration described above, in which the current which flows through the electric motor is gradually decreased, abrupt displacement of the steered wheels can be suppressed since the speed of decrease in torque of the electric motor can be reduced compared to a case where the current which flows through the electric motor is decreased stepwise.

[4] Another aspect of the present invention provides the steering control device according to the aspect described above, in which: the torque operation process includes a process of setting required torque required for the electric motor on the basis of an output value of an integral element; and the decreasing process includes a process of decreasing an absolute value of the output value of the integral element.

The absolute value of the output value of the integral element is not necessarily a small value when the absolute value of the difference between the detection value of the steered angle and the target steered angle has become small. Thus, with the configuration described above, the absolute value of the required torque can be decreased more reliably, and hence the current which flows through the electric motor can be decreased more reliably, by decreasing the absolute value of the output value of the integral element.

[5] Another aspect of the present invention provides the steering control device according to the aspect described above, in which the decreasing process includes a process of gradually decreasing an absolute value of a difference between a detection value of the steered angle of the steered wheels and the target steered angle to be input to the torque operation process.

With the configuration described above, the absolute value of the operation amount for the feedback control can be decreased, and hence the current which flows through the electric motor can be decreased, by gradually decreasing the absolute value of the difference described above.

[6] Another aspect of the present invention provides the steering control device according to the aspect described above, in which the decreasing process is a process which includes a determination process of determining whether or not a logical product of a statement that the vehicle speed is equal to or less than the prescribed speed, a statement that the absolute value of the input torque is equal to or less than the prescribed value, and a statement that an absolute value of a steering speed is equal to or less than a prescribed speed is true, and in which the current which flows through the electric motor is decreased in the case where it is determined in the determination process that the logical product is true.

According to the determination process described above, it is possible to determine, with high precision, whether the user has no intention to operate the steering wheel and it is not problematic if the current which actually flows through the electric motor is decreased with respect to a current required by the feedback control on the steered angle.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 illustrates a steering control device and a steering device according to an embodiment;
FIG. 2 is a block diagram illustrating a process executed by a control device according to the embodiment;
FIG. 3 is a flowchart illustrating the procedure of a process performed when the vehicle is stationary according to the embodiment; and
FIG. 4 illustrates the function of the embodiment.

DETAILED DESCRIPTION OF EMBODIMENTS

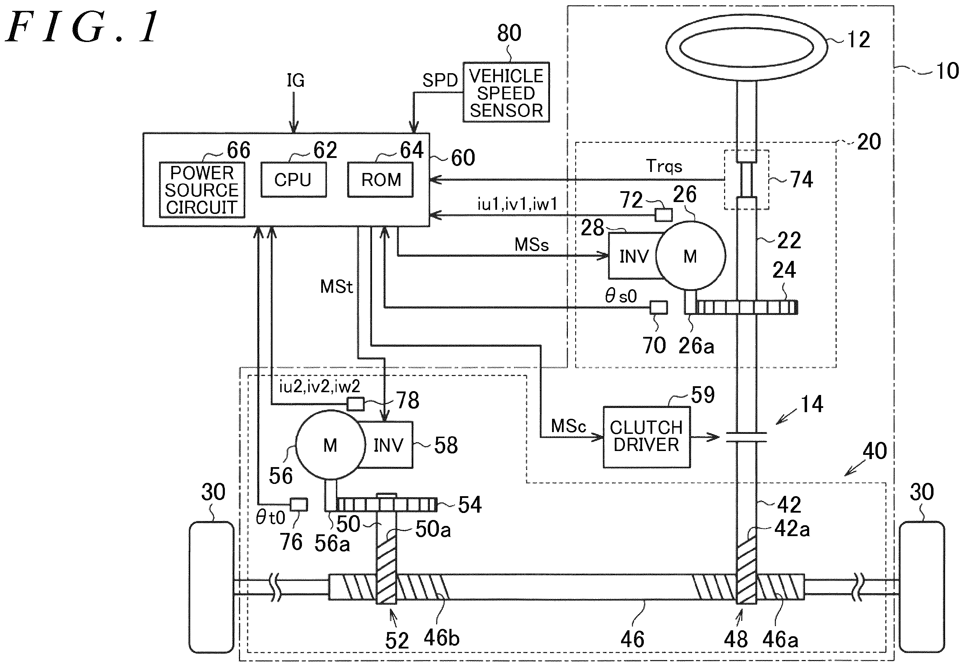

A steering control device according to an embodiment of the present invention will be described below with reference to the drawings. A steering device 10 illustrated in FIG. 1 is mounted on a vehicle on which only an internal combustion engine is mounted as an in-vehicle motor that generates thrust for the vehicle. In the steering device 10, a steering wheel 12 is connected to a steering-side actuator 20 that applies a reaction force which is a force that resists an operation on the steering wheel 12. The steering-side actuator 20 includes a steering shaft 22 fixed to the steering wheel 12, a steering-side speed reducer 24, a steering-side motor 26 with a rotary shaft 26a coupled to the steering-side speed reducer 24, and a steering-side inverter 28 that drives the steering-side motor 26. In the present embodiment, a surface permanent magnet synchronous motor (SPM) is exemplified as the steering-side motor 26.

The steering shaft 22 can be coupled to a pinion shaft 42 of a steered-side actuator 40 via a clutch 14. The steered-side actuator 40 includes a first rack-and-pinion mechanism 48, a second rack-and-pinion mechanism 52, a steered-side motor 56, and a steered-side inverter 58. In the present embodiment, an SPM is exemplified as the steered-side motor 56.

The first rack-and-pinion mechanism 48 includes a rack shaft 46 and the pinion shaft 42 which are disposed with a predetermined crossing angle therebetween, and first rack teeth 46a formed on the rack shaft 46 and pinion teeth 42a formed on the pinion shaft 42 are meshed with each other. Steered wheels 30 are coupled to both ends of the rack shaft 46 via tie rods.

The second rack-and-pinion mechanism 52 includes the rack shaft 46 and a pinion shaft 50 which are disposed with a predetermined crossing angle therebetween, and second rack teeth 46b formed on the rack shaft 46 and pinion teeth 50a formed on the pinion shaft 50 are meshed with each other.

The pinion shaft 50 is connected to a rotary shaft 56a of the steered-side motor 56 via a steered-side speed reducer 54. The steered-side inverter 58 is connected to the steered-side motor 56. The clutch 14 is switched from an engaged state to a disengaged state by a process of energizing a clutch driver 59.

The steering control device (control device 60) executes control for steering the steered wheels 30 in accordance with an operation on the steering wheel 12 by operating the steering device 10 which includes the steering-side actuator 20 and the steered-side actuator 40. That is, in the present embodiment, a steer-by-wire system is implemented by the steering-side actuator 20 and the steered-side actuator 40, and the control device 60 normally executes control for steering the steered wheels 30 in accordance with an operation on the steering wheel 12 while maintaining the clutch 14 in the disengaged state. In this event, the control device 60 references a rotational angle $\theta s0$ of the rotary shaft 26a of the steering-side motor 26 detected by a steering-side angle sensor 70, currents iu1, iv1, and iw1 that flow through the steering-side motor 26 detected by a steering-side current sensor 72, and input torque (steering torque Trqs) input to the steering wheel 12 detected by a torque sensor 74. In addition, the control device 60 retrieves a rotational angle $\theta t0$ of the rotary shaft 56a of the steered-side motor 56 detected by a steered-side angle sensor 76, currents iu2, iv2, and iw2 that flow through the steered-side motor 56 detected by a steered-side current sensor 78, and a vehicle speed SPD detected by a vehicle speed sensor 80.

The control device 60 includes a central processing unit (CPU) 62, a ROM 64, and a power source circuit 66, and the CPU 62 executes a program stored in the ROM 64 to execute a process of steering the steered wheels 30.

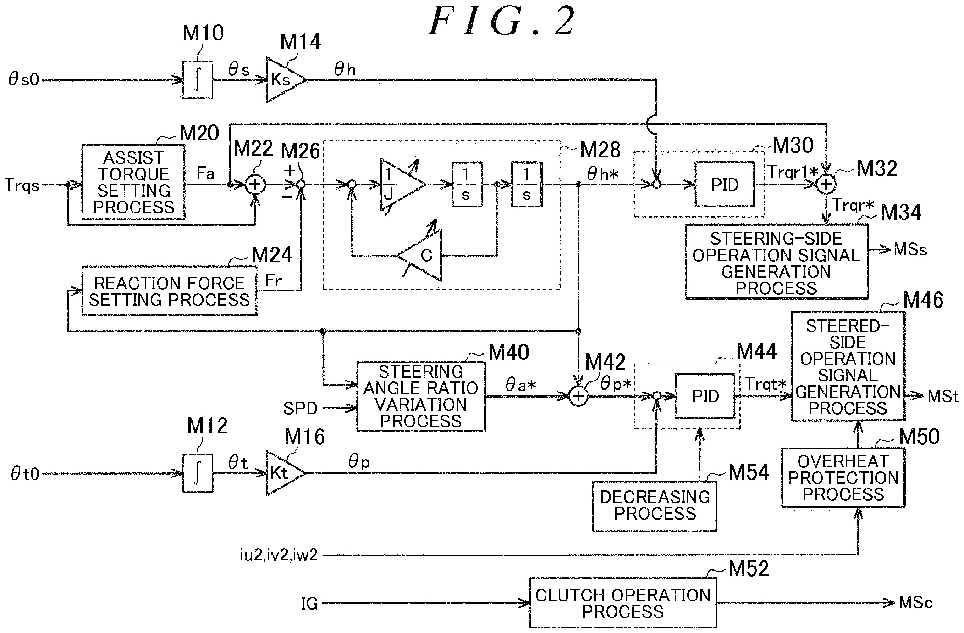

FIG. 2 illustrates a part of a process executed by the control device 60. The process illustrated in FIG. 2 is implemented by the CPU 62 executing the program which is stored in the ROM 64. An integration process M10 is a process of obtaining a rotational angle $\theta s$ by converting the rotational angle $\theta s0$, which is detected by the steering-side angle sensor 70, into a value for an angular range that is wider than 0 to 360°. That is, in the case where the steering wheel 12 is operated to be rotated to a limit to the right or the left from a neutral position at which the vehicle travels straight, for example, the rotary shaft 26a is rotated by more than one rotation. Thus, in the case where the rotary shaft 26a makes two rotations in a predetermined direction from a state in which the steering wheel 12 is at the neutral position, for example, the integration process M10 outputs a value of 720°. The integration process M10 outputs a value of zero when the steering wheel 12 is at the neutral position.

An integration process M12 is a process of obtaining a rotational angle $\theta t$ by converting the rotational angle $\theta t0$, which is detected by the steered-side angle sensor 76, into a value for an angular range that is wider than 0 to 360°. That is, in the case where the steered wheels 30 are displaced to a limit from a neutral position, for example, the rotary shaft 56a is rotated by more than one rotation. Thus, in the case where the rotary shaft 56a makes two rotations in a predetermined direction from a state in which the steered wheels 30 are at the neutral position, for example, the integration process M12 outputs a value of 720°. The integration process M12 outputs a value of zero when the steered wheels 30 are at the neutral position.

A measurement unit setting process M14 is a process of calculating a steering angle $\theta h$ by multiplying the rotational angle $\theta s$ by a conversion coefficient Ks. The conversion coefficient Ks is determined in accordance with the ratio between the rotational speed of the steering-side speed reducer 24 and the rotational speed of the rotary shaft 26a of the steering-side motor 26. Consequently, the amount of variations in the rotational angle $\theta s$ of the rotary shaft 26a is converted into the amount of rotation of the steering wheel 12. Therefore, the steering angle $\theta h$ is the rotational angle of the steering wheel 12 with reference to the neutral position.

A measurement unit setting process M16 is a process of calculating a steered angle $\theta p$ by multiplying the rotational angle $\theta t$ by a conversion coefficient Kt. The conversion coefficient Kt is the product of the ratio between the rotational speed of the steered-side speed reducer 54 and the rotational speed of the rotary shaft 56a of the steered-side motor 56 and the ratio between the rotational speed of the pinion shaft 50 and the rotational speed of the pinion shaft 42. Consequently, the amount of rotation of the rotary shaft 56a is converted into the amount of rotation of the steering wheel 12 for a case where it is assumed that the clutch 14 is in the engaged state.

In the processes in FIG. 2, the rotational angles $\theta s$ and $\theta t$, the steering angle $\theta h$, and the steered angle $\theta p$ are positive in the case where the rotational angle is in a predetermined direction, and are negative in the case where the rotational angle is in the opposite direction. That is, the integration process M10 is a process that outputs a negative value in the case where the rotary shaft 26a is rotated in a direction opposite to the predetermined direction from a state in which the steering wheel 12 is at the neutral position, for example. It should be noted, however, that this is merely an example of the logic of the control system.

An assist torque setting process M20 is a process of calculating assist torque Fa on the basis of the steering torque Trqs which is detected by the torque sensor 74. The assist torque Fa is set to a larger value as the steering torque Trqs is larger.

An addition process M22 is a process of outputting a value obtained by adding the steering torque Trqs to the assist torque Fa. A reaction force setting process M24 is a process of setting a reaction force, which is a force that resists an operation on the steering wheel 12, in accordance with an operation on the steering wheel 12 and steering of the steered wheels 30. Particularly, the reaction force setting process M24 is a process of calculating, as a reaction force Fr, a value obtained by converting a component of an axial force applied to the rack shaft 46 corresponding to the reaction force into torque of the steering-side motor 26. It should be noted, however, that the axial force does not need to coincide with an axial force actually transferred to the steering wheel 12 in the case where the clutch 14 is in the engaged state, and may be a value set as desired.

A deviation calculation process M26 is a process of outputting a value obtained by subtracting the reaction force Fr from the output value from the addition process M22. A target steering angle setting process M28 is a process of setting a target steering angle $\theta h^*$ on the basis of the output value from the deviation calculation process M26. A model formula expressed by the following formula (c1) which correlates the output value $\Delta F$ from the deviation calculation process M26 and the target steering angle $\theta h^*$ is utilized.

$$\Delta F = C \cdot \theta h^{*\prime} + J \cdot \theta h^{*\prime\prime} \qquad (c1)$$

The model which is expressed by the above formula (c1) is a model in which the steering wheel 12 and the steered wheels 30 are mechanically coupled to each other and which determines an axial force applied to the rack shaft 46 along with displacement of the steering wheel 12. It should be noted, however, that the axial force has been converted into torque of the steering-side motor 26. That is, the axial force has been converted into torque applied to the rotary shaft 26a of the steering-side motor 26 when the target axial force is applied to the rack shaft 46 with the clutch 14 in the engaged state. In the above formula (c1), a viscosity coefficient C is obtained by modeling the friction etc. of the steering device 10, and an inertia coefficient J is obtained by modeling the inertia of the steering device 10. The viscosity coefficient C and the inertia coefficient J are set so as to be variable in accordance with the vehicle speed SPD.

A steering-side feedback process M30 is a process of setting a steering-side torque command value Trqr1*, which is a torque command value for the steering-side motor 26, as an operation amount for controlling the steering angle $\theta h$ to the target steering angle $\theta h^*$ through feedback control. Specifically, the steering-side torque command value Trqr1* is set to the sum of the respective output values of a proportional element and a differential element to which a value obtained by subtracting the steering angle $\theta h$ from the target steering angle $\theta h^*$ is input and the output value of an integral element that outputs an integral value of a value that matches the difference between the target steering angle $\theta h^*$ and the steering angle $\theta h$.

An addition process M32 is a process of calculating a final steering-side torque command value Trqr* by adding the assist torque Fa to the steering-side torque command value Trqr1*. A steering-side operation signal generation process M34 is a process of generating an operation signal MSs for the steering-side inverter 28 on the basis of the steering-side torque command value Trqr* to output the operation signal MSs to the steering-side inverter 28. This process can be implemented by well-known current feedback control in which a command value for a q-axis current is set on the basis of the steering-side torque command value Trqr* and command values for d-axis and q-axis voltages are set as operation amounts for controlling d-axis and q-axis currents to command values through feedback control. The d-axis current may be controlled to zero. In the case where the rotational speed of the steering-side motor 26 is high, however, field weakening control may be executed with the absolute value of the d-axis current set to a value that is more than zero. It should be noted, however, that it is also possible to set the absolute value of the d-axis current to a value that is more than zero in a low rotational speed region.

A steering angle ratio variation process M40 is a process of setting a target operation angle $\theta a^*$ for variably setting a steering angle ratio, which is the ratio between the steering angle $\theta h$ and the steered angle $\theta p$, on the basis of the vehicle speed SPD. An addition process M42 is a process of calculating a target steered angle $\theta p^*$ by adding the target operation angle $\theta a^*$ to the target steering angle $\theta h^*$.

A steered-side feedback process M44 is a process of setting a steered-side torque command value Trqt*, which is a torque command value for the steered-side motor 56, as an operation amount for controlling the steered angle $\theta p$ to the target steered angle $\theta p^*$ through feedback control. Specifically, the steered-side torque command value Trqt1 is set to the sum of the respective output values of a proportional element and a differential element to which a value obtained by subtracting the steered angle $\theta p$ from the target steered angle $\theta p^*$ is input and the output value of an integral element that outputs an integral value of a value that matches the difference between the target steered angle $\theta p^*$ and the steered angle $\theta p$.

A steered-side operation signal generation process M46 is a process of generating an operation signal MSt for the steered-side inverter 58 on the basis of the steered-side torque command value Trqt* to output the operation signal MSt to the steered-side inverter 58. This process can be performed in the same manner as the operation signal generation process performed in the steering-side operation signal generation process M34.

The reaction force setting process M24 is a process of setting the reaction force Fr using the target steering angle $\theta h^*$ as an input. Specifically, in the reaction force setting process M24, the reaction force Fr is set to a larger value as the magnitude of the target steering angle $\theta h^*$ (the amount of rotation with reference to the neutral position) is larger.

An overheat protection process M50 is a process of regulating a current that flows through the steered-side motor 56 to a small value in the case where the temperature of the steered-side motor 56 is excessively high. Specifically, the overheat protection process M50 includes a process of raising a temperature Tt of the steered-side motor 56 by a predetermined amount $\Delta T1$ in the case where the absolute value of the q-axis current which is determined by the currents iu2, iv2, and iw2 is a predetermined value or more, and lowering the temperature Tt by a predetermined amount $\Delta T2$ in the case where the absolute value of the q-axis current is less than the predetermined value, in each predetermined cycle. The overheat protection process M50 also includes a process of regulating the absolute value of a command value for the q-axis current to a prescribed value or less in the case where the temperature Tt is a threshold or more.

A clutch operation process M52 includes a process of bringing the clutch 14 into the disengaged state, and bringing power transfer between the steering wheel 12 and the steered wheels 30 into a blocked state, in the case where it is determined that an IG signal as a travel permission signal for the vehicle is switched from an off state to an on state. The clutch operation process M52 also includes a process of switching the clutch 14 from the disengaged state to the engaged state in the case where it is determined that the IG signal is switched from the on state to the off state. The IG signal is a signal for starting combustion control on the internal combustion engine.

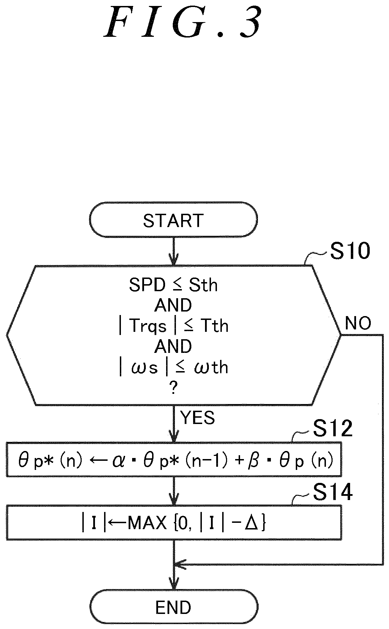

A decreasing process M54 is a process of decreasing a current that flows through the steered-side motor 56 in the case where the vehicle is stationary at an intersection or the like, for example. FIG. 3 illustrates the procedure of the decreasing process M54. The process illustrated in FIG. 3 is implemented by the CPU 62 executing the program which is stored in the ROM 64 repeatedly in predetermined cycles, for example. In the following, the step number of each process is expressed by a number preceded by the letter S.

In a sequence of processes illustrated in FIG. 3, the CPU 62 first determines whether or not the logical product of (a) a condition that the vehicle speed SPD is equal to or less than a prescribed speed Sth, (b) a condition that the absolute value of the steering torque Trqs is equal to or less than a prescribed value Tth, and (c) a condition that the absolute value of a steering speed $\omega$s is equal to or less than a prescribed speed $\omega$th is true (S10). This process is a process of determining whether or not the user is not operating the steering wheel 12 with the vehicle stationary at an intersection or the like, for example. The prescribed speed Sth is a value for determining that the vehicle is stationary or substantially stationary, and is a small value that is close to zero. The prescribed value Tth is a value for determining that the user is not operating the steering wheel 12, and is a value that is close to zero. The prescribed speed $\omega$th is a value for determining that the user is not operating the steering wheel 12, and is a value that is close to zero. The steering speed $\omega$s is the amount of variations in the steering angle $\theta$h per unit time, and is calculated by the CPU 62.

In the case where it is determined that the logical product is true (S10: YES), the CPU 62 executes a process of gradually decreasing the absolute value of the difference between the target steered angle $\theta$p* and the steered angle $\theta$p to zero (S12). Particularly, the CPU 62 substitutes an index number moving average process value of the preceding target steered angle $\theta$p*(n-1) and the current steered angle $\theta$p(n) into the current target steered angle $\theta$p*(n). The index number moving average process value may be obtained as $\alpha \cdot \theta p*(n-1) + \beta \cdot \theta p(n)$ with weighting factors $\alpha$ and $\beta$ set to values that are more than zero and less than one that meet $\alpha + \beta = 1$.

In the case where the process in S12 is completed, the CPU 62 sets the larger one of a value obtained by subtracting a predetermined amount $\Delta$ from the absolute value of an output value I and zero to the new absolute value of the output value I (S14). In the case where the output value I is not set to zero by this process, the sign of the output value I is the same as that of the preceding value.

In the case where the process in step S14 is completed, or in the case where a negative determination is made in the process in step S10, the CPU 62 temporarily ends the sequence of processes illustrated in FIG. 3. When switching is made in the process in S10 from a state in which an affirmative determination is made to a state in which a negative determination is made, the CPU 62 executes a process of storing the target steered angle $\theta$p* at that time as an initial value $\theta$p*0 and converging the initial value $\theta$p*0 to the target steered angle $\theta$p* which is output in the addition process M42 over a period with a predetermined length. This process may be a process of setting the initial value of the target steered angle $\theta$p*, which is input to the steered-side feedback process M44, to the initial value $\theta$p*0 and substituting an index number moving average process value of the current value of the target steered angle $\theta$p*, which is output from the addition process M42, and the preceding value of the target steered angle $\theta$p*, which is input to the steered-side feedback process M44, into the target steered angle $\theta$p* to be input as described above.

The function and the effect of the present embodiment will be described.

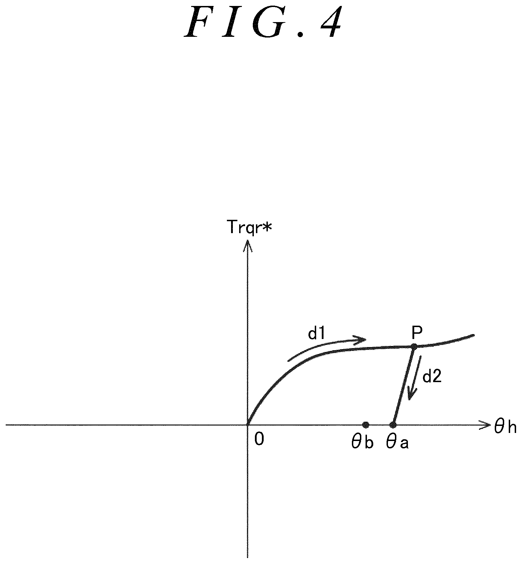

(1) FIG. 4 illustrates the relationship between the steering angle $\theta$h and the steering-side torque command value Trqr*. As illustrated in FIG. 4, in the case where the steering angle $\theta$h is increased from zero, the steering-side torque command value Trqr* is increased along a curve d1. After that, in the case where the user stops the vehicle at an intersection or the like, for example, and also stops operating the steering wheel 12 at the steering angle $\theta$h at a point P in FIG. 4, the absolute value of the steering torque Trqs becomes smaller. When the absolute value of the steering torque Trqs becomes smaller, the absolute value of the target steering angle $\theta$h* is brought to a value that is smaller than the absolute value of the steering angle $\theta$h, and the steering wheel 12 is returned toward the neutral position. Consequently, the steering-side torque command value Trqr* becomes smaller as the absolute value of the steering angle $\theta$h is decreased along d2 in FIG. 4, and the steering-side torque command value Trqr* becomes zero when the steering angle θh is brought to θa.

However, the target steered angle θp* which is set in accordance with the steering angle θh is not an angle that is always maintained even if torque of the steered-side motor 56 is zero. For example, in the case where the target steering angle θh* at the time when the steering angle θh is brought to θb is an angle at which the steered angle θp is maintained as it is even if torque of the steered-side motor 56 is zero, the steered angle θp is maintained at the target steered angle θp* by the steered-side torque command value Trqt* which is obtained through the steered-side feedback process M44. In practice, the steering torque Trqs is not always zero in the case where the user places his/her hand on the steering wheel 12, and the steering angle θh differs from θa in that case. Even in that case, however, the target steered angle θp* which is set in accordance with the steering angle θh is not an angle that is always maintained even if torque of the steered-side motor 56 is zero.

Therefore, an unwanted current may continuously flow through the steered-side motor 56 when the vehicle is stationary. Thus, the CPU 62 converges the target steered angle θp* to the steered angle θp in the case where the logical product of the condition (a), the condition (b), and the condition (c) described above is true. Consequently, the output value of the proportional element and the output value of the differential element can be converged to zero. In addition, the CPU 62 converges the output value I of the integral element to zero, independently of the difference between the target steered angle θp* and the steered angle θp, in the case where the logical product is true. Therefore, the steered-side torque command value Trqt* can be converged to zero. Therefore, it is possible to suppress an unwanted current continuously flowing through the steered-side motor 56. Thus, it is possible to suppress a situation in which the temperature of the steered-side motor 56 is raised and a current that flows through the steered-side motor 56 is regulated by the overheat protection process M50. Therefore, a situation in which steering control on the steered wheels 30 is restrained by the overheat protection process M50 when the user resumes operation of the vehicle is suppressed.

The situation in which an unwanted current flows through the steered-side motor 56 when the vehicle is stationary is caused by feedback control on the steered angle θp. Such a situation is not likely to occur in the case where the clutch 14, the steering-side actuator 20, or the like are not provided, steered angle feedback control is not performed, and a process of providing required torque required for the steered-side motor 56 in accordance with the steering torque Trqs as assist torque is performed. That is, in the case of a process in which assist torque is set, the absolute value of the assist torque becomes smaller as the absolute value of the steering torque Trqs becomes smaller. This is because the steered angle may be varied when the absolute value of the assist torque becomes smaller, the steering wheel 12 is displaced in the case where the steered angle is varied, but torque of the steered-side motor 56 remains small since the user does not increase the absolute value of the steering torque Trqs if there is no problem with the steered angle.

According to the present embodiment described above, the following effects can be further obtained.

(2) The steered-side torque command value Trqt* is gradually decreased to zero by converging the target steered angle θp* to the steered angle θp and gradually decreasing the absolute value of the output value I of the integral element to zero. Consequently, abrupt displacement of the steered wheels 30 can be suppressed since the speed of decrease in torque of the steered-side motor 56 can be reduced compared to a case where the steered-side torque command value Trqt* is decreased stepwise.

(3) The target steered angle θp* is converged to the steered angle θp. Consequently, it is possible to suppress a situation in which torque of the steered-side motor 56 is abruptly increased since the initial value θp*0 of the target steered angle θp* does not deviate from the steered angle θp in the case where the logical product of the condition (a), the condition (b), and the condition (c) described above is false and normal feedback control performed in accordance with the difference between the steered angle θp and the target steered angle θp* is started. Another advantage is that the speed at which the steered angle θp is changed is easily adjustable in the case where a process of changing the gain of at least one of the proportional element and the differential element in accordance with the absolute value of the target steered angle θp* or the absolute value of the steered angle θp, for example, is performed, compared to a case where the output value itself of at least one of the elements is gradually decreased. That is, in the case where an axial force that varies the steered angle θp differs in accordance with the steered angle θp, it is necessary to set the speed of variation in torque in accordance with the steered angle θp in order to appropriately adjust the speed at which the steered angle θp is changed. In the case where the gain is set in accordance with the absolute value of the steered angle θp or the like, the gain is appropriately set in accordance with the axial force, and therefore it is effective to perform a process in which the target steered angle θp* is caused to transition to the steered angle θp, rather than directly setting the speed of decrease in torque.

The correspondence between the elements in the above embodiment and the elements described in the above "SUMMARY OF THE INVENTION" section is as follows. In the following, the correspondence is described for each number given to the means for solving the problem described in the "SUMMARY OF THE INVENTION" section. [1] The target steered angle calculation process corresponds to the assist torque setting process M20, the addition process M22, the reaction force setting process M24, the deviation calculation process M26, the target steering angle setting process M28, the steering angle ratio variation process M40, and the addition process M42. The torque operation process corresponds to the steered-side feedback process M44 and the steered-side operation signal generation process M46. [2] The switching device corresponds to the clutch 14 and the clutch driver 59. [3] The process of gradually decreasing the current which flows through the electric motor corresponds to the processes in S12 and S14. [4] The torque operation process corresponds to the process in S14. The required torque corresponds to the steered-side torque command value Trqt*. [5] The "process of gradually decreasing an absolute value of a difference between a detection value of the steered angle of the steered wheels and the target steered angle to be input to the torque operation process" corresponds to the process in S12. [6] The determination process corresponds to the process in S10.

The present embodiment can be implemented in modified forms as described below. The present embodiment and the following modifications can be implemented in combination with each other as long as there is no technical contradiction.

Regarding the condition for executing the decreasing process, in the embodiment described above, the condition for executing the decreasing process is that the logical product of the condition (a), the condition (b), and the condition (c) described above is true. However, the present invention is not limited thereto. For example, the execution condition may be that the logical product of the condition (a) and the condition (b) described above is true.

Regarding the decreasing process, in the embodiment described above, the target steered angle $\theta p^*$ is converged to the steered angle $\theta p$ by updating the target steered angle $\theta p^*$ to an index number moving average process value of the target steered angle $\theta p^*$ and the steered angle $\theta p$. However, the present invention is not limited thereto. For example, the target steered angle $\theta p^*$ may be varied at a speed of $|\Delta\theta p|/T$ to transition to the steered angle $\theta p$ using a difference $\Delta\theta p$ between the target steered angle $\theta p^*$ and the steered angle $\theta p$ at the time of start of the decreasing process and a time T determined in advance.

In the embodiment described above, the absolute value of the output value I of the integral element is decreased by the predetermined amount $\Delta$ for each predetermined time. However, the present invention is not limited thereto. For example, the absolute value of the output value I may be decreased to zero at a speed of $|I|/T$ using the output value I at the time of start of the decreasing process and the time T determined in advance.

The process of gradually decreasing the magnitude of the steered-side torque command value Trqt* to zero is not limited to a process that includes a process of converging the target steered angle $\theta p^*$ to the steered angle $\theta p$. For example, the process may be a process of gradually decreasing the magnitude of the steered-side torque command value Trqt* to be input to the steered-side operation signal generation process M46 with the output of the steered-side feedback process M44 invalidated. In this case, it is desirable that the output value I of the integral element should be initialized to zero in the case where the logical product of the condition (a), the condition (b), and the condition (c) described above is false such as when the steering wheel 12 is operated, for example.

In the embodiment described above, a current that flows through the steered-side motor 56 is decreased to zero by gradually decreasing the magnitude of the steered-side torque command value Trqt* to zero. However, the present invention is not limited thereto. For example, in the steered-side operation signal generation process M46, a current command value may be gradually decreased with the steered-side torque command value Trqt* invalidated. In this case, it is desirable that the output value I of the integral element should be initialized to zero in the case where the logical product of the condition (a), the condition (b), and the condition (c) described above is false such as when the steering wheel 12 is operated, for example.

In the embodiment described above, a current that flows through the steered-side motor 56 is decreased to zero. However, the present invention is not limited thereto. For example, the current may be gradually decreased to a prescribed value that is more than zero. It should be noted, however, that it is not essential to gradually decrease the current, and the current may be decreased stepwise to a prescribed value that is more than zero or zero, for example.

Regarding required torque required for the electric motor, in the embodiment described above, the steered-side torque command value Trqt* is calculated in the steered-side feedback process M44 as required torque required for the steered-side motor 56. However, the present invention is not limited thereto. For example, if only minimum-current maximum-torque control is executed for control on the steered-side motor 56, a command value for a current q-axis may be calculated as required torque required for the steered-side motor 56. Meanwhile, in the case where the electric motor is a brushed electric motor as described in the section regarding the electric motor below, for example, a drive circuit for the electric motor may be an H-bridge circuit, and a command value for a current that flows through the electric motor may be calculated as required torque required for the steered-side motor 56.

Regarding the torque operation process, in the embodiment described above, the sum of the output value of the proportional element, the output value of the integral element, and the output value of the differential element is used as an operation amount for feedback control. However, the present invention is not limited thereto. For example, the operation amount for feedback control may be the sum of the output value of the proportional element and the output value of the integral element, the sum of the output value of the proportional element and the output value of the differential element, or the sum of the output value of the integral element and the output value of the differential element. Alternatively, for example, the operation amount for feedback control may be the output value of the proportional element, the output value of the integral element, or the output value of the differential element.

It should be noted, however, that the process of operating torque is not limited to being based on only a classical controller. For example, the output value of the integral element may be used to set required torque, and a disturbance observer may be constituted by the integral element. Also in this case, for example in the case where the steered angle $\theta p$ coincides with the target steered angle $\theta p^*$, the absolute value of the output value of the integral element is occasionally not zero as a minimum value, and thus the process of gradually decreasing the absolute value of the output value of the integral element is effective.

Regarding the travel permission signal, in the embodiment described above, an IG signal is exemplified as the travel permission signal. However, the present invention is not limited thereto. For example, in a vehicle that includes a rotary electric machine as an in-vehicle motor that generates thrust for the vehicle as described in the section about the vehicle below, the travel permission signal for the vehicle may be a signal that closes a relay that can supply electric power to the rotary electric machine, for example. It should be noted, however, that it is not essential to bring the clutch 14 into the disengaged state on condition that the travel permission signal is in the on state, and the clutch 14 may be basically maintained in the disengaged state except when a fail-safe process is performed such as when there is an abnormality with the steered-side actuator 40, for example.

Regarding the electric motor, the steered-side motor 56 is not limited to an SPM, and may be an interior permanent magnet synchronous motor, for example. Further, the steered-side motor 56 is not limited to a synchronous motor, and may be an induction motor, for example. In addition, the steered-side motor 56 is not limited to a brushless electric motor, and may be a brushed electric motor.

Regarding the steered-side actuator, a steering operation mechanism of the steered-side actuator 40 is not limited to a rack-and-pinion type. For example, the steering operation mechanism may be a rack-cross type, a rack-coaxial type, or a type in which the rack shaft 46 and the rotary shaft 56a are disposed in parallel with each other.

Regarding the steering device, it is assumed that the steering device includes the clutch 14 which blocks power transfer between the steering wheel 12 and the steered wheels 30 and normally executes steering control when power transfer is blocked by the clutch 14 in the embodiment described above. However, the present invention is not limited thereto. For example, the steering device may be configured such that the steering wheel 12 and the steered wheels 30 are mechanically coupled to each other. Also in this case, an unnecessarily large current may flow through the steered-side motor 56 in the case where the user does not operate the steering wheel 12 when the vehicle is stationary in the case where a controller is configured to set the target steered angle $\theta p^*$ in accordance with an operation on the steering wheel 12, for example, and controls the steered angle $\theta p$ to the target steered angle $\theta p^*$ through feedback control. Therefore, it is effective to decrease a current in the same manner as the embodiment described above or modifications thereof.

Regarding the steering control device, the steering control device is not limited to a steering control device that includes the CPU 62 and the ROM 64 and that executes software processes. For example, the steering control device may include a dedicated hardware circuit (such as an ASIC, for example) that processes through hardware at least some of the software processes performed in the embodiment described above. That is, the steering control device may be configured as described in any of (p) to (r) below. (p) The steering control device includes a processing device that executes all of the above processes in accordance with a program, and a program storage device such as a ROM that stores the program. (q) The steering control device includes a processing device that executes some of the above processes in accordance with a program, a program storage device, and a dedicated hardware circuit that executes the rest of the processes. (r) The steering control device includes a dedicated hardware circuit that executes all of the above processes. The steering control device may include a plurality of software processing circuits that each include a processing device and a program storage device or a plurality of dedicated hardware circuits. That is, the above processes may be executed by a processing circuit that includes at least either one or a plurality of software processing circuits or one or a plurality of dedicated hardware circuits.

Regarding the vehicle, the vehicle which includes a steering device is not limited to a vehicle in which an in-vehicle motor that generates thrust for the vehicle includes only an internal combustion engine, and may be a vehicle in which the in-vehicle motor includes an internal combustion engine and a rotary electric machine. It should be noted, however, that the in-vehicle motor does not necessarily include an internal combustion engine.

Besides, the steer-by-wire system does not necessarily include the clutch 14, and the present invention is also applicable to a steer-by-wire system that does not include the clutch 14.

## Claims

1. A steering control device (60) that controls a steering device (10) that includes a steered-side actuator (40) that is capable of steering steered wheels (30) of a vehicle utilizing torque of an electric motor (56), comprising:

   a central processing unit (62), wherein the central processing unit (62) executes:

   a target steered angle calculation process (M20, M22, M24, M26, M28, M40, M42) of calculating a target steered angle ($\theta p^*$), which is a target value for a steered angle ($\theta p$) of the steered wheels (30), in accordance with an operation on a steering wheel (12);
   a torque operation process (M44, M46) of operating torque of the electric motor (56) in order to control a detection value of the steered angle ($\theta p$) to the target steered angle ($\theta p^*$) through feedback control; and
   a decreasing process (M54) of decreasing a current that flows through the electric motor (56), **characterized in that**
   the decreasing process is performed in the case where a vehicle speed (SPD) is equal to or less than a prescribed speed (Sth) and an absolute value of input torque (Trqs) input to the steering wheel (12) is equal to or less than a prescribed value (Tth).

2. The steering control device (60) according to claim 1, wherein:

   the steering device (10) includes a switching device (14, 59) that switches transfer of power between the steering wheel (12) and the steered wheels (30) between a transfer state and a blocked state; and
   the decreasing process is executed when the switching device switches the power transfer to the blocked state.

3. The steering control device (60) according to claim 1 or 2, wherein
   the decreasing process (M54) is a process (S12, S14) of gradually decreasing the current which flows through the electric motor (56).

4. The steering control device (60) according to any one of claims 1 to 3, wherein:

   the torque operation process (M44, M46) includes a process (M44) of setting required torque (Trqt*) required for the electric motor (56) on the basis of an output value of an integral element; and
   the decreasing process includes a process of decreasing an absolute value of the output value of the integral element.

5. The steering control device (60) according to claim 3 or 4, wherein
   the decreasing process (M54) includes a process (S12) of gradually decreasing an absolute value of a difference between a detection value of the steered angle ($\theta p$) of the steered wheels (30) and the target steered angle ($\theta p^*$), the difference to be input to the torque operation process (M44, M46).

6. The steering control device (60) according to any one of claims 1 to 5, wherein
   the decreasing process is a process which includes a determination process (S10) of determining whether or not a logical product of a statement that the vehicle speed (SPD) is equal to or less than the prescribed speed (Sth), a statement that the absolute value of the input torque (Trqs) is equal to or less than the prescribed value (Tth), and a statement that an absolute value of a steering speed ($\omega s$) is equal to or less than a prescribed speed ($\omega th$) is true, and in which the current which flows through the electric motor (56) is decreased in the case where it is determined in the determination process (S10) that the logical product is true.

## Patentansprüche

1. Lenksteuervorrichtung (60), die eine Lenkvorrichtung (10) steuert, die ein Stellglied einer gelenkten Seite (40) aufweist, das in der Lage ist, gelenkte Räder (30) eines Fahrzeugs unter Verwendung eines Drehmoments eines Elektromotors (56) zu lenken, mit
   einer zentralen Verarbeitungseinheit (62), wobei die zentrale Verarbeitungseinheit (62) die folgenden Prozesse ausführt:

   einen Ziel-Gelenkt-Winkel-Berechnungsprozess (M20, M22, M24, M26, M28, M40, M42) zur Berechnung eines Ziel-Gelenkt-Winkels ($\theta \rho^*$), der ein Zielwert für einen gelenkten Winkel ($\theta p$) der gelenkten Räder (30) ist, in Übereinstimmung mit einer Betätigung eines Lenkrads (12);
   einen Drehmomentbetätigungsprozess (M44, M66) zur Betätigung des Drehmoments des Elektromotors (56), um einen Erfassungswert des gelenkten Winkels ($\theta p$) zum Ziel-Gelenkt-Winkel ($\theta\rho^*$) durch eine Rückkopplungssteuerung zu steuern; und

einen Absenkungsprozess (M54) zum Absenken eines durch den Elektromotor (56) fließenden Stroms, **dadurch gekennzeichnet, dass** der Absenkungsprozess in dem Fall durchgeführt wird, in dem eine Fahrzeuggeschwindigkeit (SPD) gleich einer vorgeschriebenen Geschwindigkeit (Sth) oder kleiner als diese ist und ein absoluter Wert des in das Lenkrad (12) eingegebenen Eingangsdrehmoments (Trqs) gleich einem vorgeschriebenen Wert (Tth) oder kleiner als dieser ist.

2. Lenksteuervorrichtung (60) nach Anspruch 1, wobei die Lenkvorrichtung (10) eine Schaltvorrichtung (14, 59) aufweist, die eine Kraftübertragung zwischen dem Lenkrad (12) und den gelenkten Rädern (30) zwischen einem Übertragungszustand und einem blockierten Zustand umschaltet; und

der Absenkungsprozess ausgeführt wird, wenn die Schaltvorrichtung die Kraftübertragung in den blockierten Zustand umschaltet.

3. Lenksteuervorrichtung (60) nach Anspruch 1 oder 2, wobei

der Absenkungsprozess (M54) ein Prozess (S12, S14) zum allmählichen Absenken des durch den Elektromotor (56) fließenden Stroms ist.

4. Lenksteuervorrichtung (60) nach einem der Ansprüche 1 bis 3, wobei:

der Drehmomentbetätigungsprozess (M44, M46) einen Prozess (M44) zum Einstellen des für den Elektromotor (56) erforderlichen Drehmoments (Trqt\*) basierend auf einem Ausgangswert eines integralen Elements umfasst; und

der Absenkungsprozess einen Prozess zum Absenken eines absoluten Wertes des Ausgangswertes des integralen Elements umfasst.

5. Lenksteuervorrichtung (60) nach Anspruch 3 oder 4, wobei

der Absenkungsprozess (M54) einen Prozess (S12) zum allmählichen Absenken eines absoluten Wertes einer Differenz zwischen einem Erfassungswert des gelenkten Winkels ($\theta p$) der gelenkten Räder (30) und dem Ziel-Gelenkt-Winkel ($\theta\rho^*$) umfasst, wobei die Differenz in den Drehmomentbetätigungsprozess (M44, M46) einzugeben ist.

6. Lenksteuervorrichtung (60) nach einem der Ansprüche 1 bis 5, wobei

der Absenkungsprozess ein Prozess ist, der einen Bestimmungsprozess (S10) umfasst, bei dem bestimmt wird, ob ein logisches Produkt einer Aussage, dass die Fahrzeuggeschwindigkeit (SPD) gleich der vorgeschriebenen Geschwindigkeit (Sth) oder kleiner als diese ist, einer Aussage, dass der absolute Wert des Eingangsdrehmoments (Trqs) gleich dem vorgeschriebenen Wert (Tth) oder kleiner als dieser ist, und einer Aussage, dass ein absoluter Wert einer Lenkgeschwindigkeit ($\omega s$) gleich einer vorgeschriebenen Geschwindigkeit ($\omega th$) oder kleiner als diese ist, wahr ist oder nicht, und bei dem der Strom, der durch den Elektromotor (56) fließt, in dem Fall abgesenkt wird, in dem im Bestimmungsprozess (S10) bestimmt wird, dass das logische Produkt wahr ist.

**Revendications**

1. Dispositif de commande de direction (60) qui commande un dispositif de direction (10) qui comporte un actionneur côté directeur (40) qui est capable de diriger des roues directrices (30) d'un véhicule en utilisant le couple d'un moteur électrique (56), comprenant :

une unité centrale de traitement (62), dans lequel

l'unité centrale de traitement (62) exécute :

un processus de calcul d'angle de braquage cible (M20, M22, M24, M26, M28, M40, M42) consistant à calculer un angle de braquage cible ($\theta\rho^*$), qui est une valeur cible pour un angle de braquage ($\theta p$) des roues directrices (30), suivant une action sur un volant (12) ;

un processus d'actionnement de couple (M44, M46) consistant à actionner un couple du moteur électrique (56) afin de commander une valeur de détection de l'angle de braquage ($\theta p$) par rapport à l'angle de braquage cible ($\theta\rho^*$) au moyen d'une commande de rétroaction ; et

un processus de diminution (M54) consistant à diminuer un courant qui circule à travers le moteur électrique (56), **caractérisé en ce que**

le processus de diminution est effectué dans le cas où une vitesse de véhicule (SPD) est égale ou inférieure à une vitesse prescrite (Sth) et où une valeur absolue d'un couple d'entrée (Trqs), entré dans le volant (12), est égale ou inférieure à une valeur prescrite (Tth).

2. Dispositif de commande de direction (60) selon la revendication 1, dans lequel :

le dispositif de direction (10) comporte un dispositif de commutation (14, 59) qui commute un transfert de puissance s'effectuant entre le volant (12) et les roues directrices (30) entre un état de transfert et un état bloqué ; et le processus de diminution est exécuté lorsque le dispositif de commutation commute le transfert de puissance vers l'état bloqué.

3. Dispositif de commande de direction (60) selon la revendication 1 ou 2, dans lequel le processus de diminution (M54) est un processus (S12, S14) consistant à diminuer progressivement le courant qui circule à travers le moteur électrique (56).

4. Dispositif de commande de direction (60) selon l'une quelconque des revendications 1 à 3, dans lequel :

le processus d'actionnement de couple (M44, M46) comporte un processus (M44) consistant à régler un couple requis (Trqt*), qui est requis pour le moteur électrique (56), sur la base d'une valeur de sortie d'un élément intégral ; et le processus de diminution comporte un processus consistant à diminuer une valeur absolue de la valeur de sortie de l'élément intégral.

5. Dispositif de commande de direction (60) selon la revendication 3 ou 4, dans lequel le processus de diminution (M54) comporte un processus (S12) consistant à diminuer progressivement une valeur absolue d'une différence entre une valeur de détection de l'angle de braquage ($\theta p$) des roues directrices (30) et de l'angle de braquage cible ($\theta \rho^*$), la différence devant être entrée lors du processus d'actionnement de couple (M44, M46).

6. Dispositif de commande de direction (60) selon l'une quelconque des revendications 1 à 5, dans lequel le processus de diminution est un processus qui comporte un processus de détermination (S10) consistant à déterminer si un produit logique, d'une affirmation selon laquelle la vitesse de véhicule (SPD) est égale ou inférieure à la vitesse prescrite (Sth), d'une affirmation selon laquelle la valeur absolue du couple d'entrée (Trqs) est égale ou inférieure à la valeur prescrite (Tth), et d'une affirmation selon laquelle une valeur absolue d'une vitesse de direction ($\omega s$) est égale ou inférieure à une vitesse prescrite ($\omega th$), est vrai ou non, et dans lequel le courant qui circule à travers le moteur électrique (56) est diminué dans le cas où il est déterminé lors du processus de détermination (S10) que le produit logique est vrai.

**FIG.1**

EP 3 521 135 B1

# *FIG.2*

# FIG.3

START

S10

$$SPD \leq Sth$$
$$AND$$
$$|\,Trqs\,| \leq Tth$$
$$AND$$
$$|\,\omega s\,| \leq \omega th$$
$$?$$

NO

YES

S12

$$\theta\,p*\,(n) \leftarrow \alpha \cdot \theta\,p*\,(n-1) + \beta \cdot \theta\,p\,(n)$$

S14

$$|\,I\,| \leftarrow MAX\,\{0, |\,I\,| - \Delta\}$$

END

# *F I G . 4*

**EP 3 521 135 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006076413 A